# FASCICULE DE BREVET EUROPEEN

(11) **EP 2 946 707 B1**
(45) Date de publication et mention de la délivrance du brevet: **12.06.2019**
(21) Numéro de dépôt: 15168043.6
(22) Date de dépôt: 18.05.2015
(51) Int. Cl.: A47J 31/44, A47J 31/60

(54) **DISPOSITIF DE PRODUCTION DE BOISSONS À BASE DE LAIT MUNI D'UN CONDUIT DE DISTRIBUTION ET MACHINE À CAFÉ COMPORTANT UN TEL DISPOSITIF**
VORRICHTUNG ZUR ZUBEREITUNG VON GETRÄNKEN AUF MILCHBASIS, DIE MIT EINER VERTEILUNGSLEITUNG AUSGESTATTET IST, UND KAFFEEMASCHINE, DIE EINE SOLCHE VORRICHTUNG UMFASST
DEVICE FOR PRODUCING MILK-BASED BEVERAGES PROVIDED WITH A DELIVERY PIPE, AND COFFEE MACHINE COMPRISING SUCH A DEVICE

(30) Priorité: 23.05.2014 FR 1454673
(43) Date de publication de la demande: 25.11.2015
(73) Titulaire: SEB S.A., 69130 Ecully (FR)
(72) Inventeur: Dupuy, Christian, 53440 LA BAZOGE MONTPINCON (FR); Goubaud, Thierry, 53300 ST FRAIMBAULT DE PRIERES (FR)
(74) Mandataire: Bourrières, Patrice

(56) Documents cités:
- EP-A1- 2 189 085
- US-A1- 2014 033 503

## Description

La prèsente invention se rapporte au domaine technique général des appareils de production de boissons à base de lait, en particulier des dispositifs destinés à coopérer avec un embout de buse de sortie vapeur d'une machine à café pour produire une boisson à base de lait, notamment de lait chauffé et moussé.

Il est connu du document EP2047779 de réaliser un dispositif de production d'une boisson à base de lait comportant un conduit d'entrée vapeur destiné à coopérer avec un embout de buse de sortie vapeur d'une machine à café et un conduit de distribution de la boisson à base de lait articulé sur le dispositif. Le conduit de distribution est mobile en rotation entre une position de rangement dans laquelle il est aligné avec une paroi du dispositif et une position de service dans laquelle une extrémité libre du conduit de distribution est amenée au-dessus d'un récipient reposant sur un repose-tasse de la machine à café. L'extrémité du conduit de distribution est généralement placée directement au-dessus de l'ouverture du récipient pour éviter que des projections tombent à coté du récipient.

Ainsi, si l'utilisateur prépare deux boissons successives dans des récipients de taille différentes, il est obligé de repositionner l'extrémité libre du conduit de distribution au-dessus de l'ouverture de chaque récipient.

De plus, le conduit de distribution ne possède qu'un degré de liberté en rotation et son extrémité ne peut pas être rapprochée au plus près de la buse de sortie café dans le cas de la préparation d'une boisson combinant café et lait. Ainsi, l'utilisateur est contraint d'utiliser un récipient muni d'une grande ouverture, même s'il souhaite réaliser une boisson de petit volume.

De plus, le maintien en position du conduit de distribution est assuré par le frottement d'un joint sur une paroi d'un logement de réception. Un tel maintien par frottement risque de se dégrader dans le temps et ainsi, le conduit de distribution ne sera plus maintenu en position au-dessus de l'ouverture du récipient.

Il est également connu du document US2014033503 un dispositif de production d'une boisson à base de lait.

Un but de la prèsente invention est de proposer un dispositif de production d'une boisson à base de lait ainsi qu'une machine à café mettant en oeuvre ce dispositif qui prèsente une mise en oeuvre simple et ergonomique et qui fonctionne en toute sécurité.

Un autre but de la présente invention est de proposer un dispositif de production d'une boisson à base de lait ainsi qu'une machine à café mettant en oeuvre ce dispositif qui prèsente une conception simple et qui soit économique à mettre en oeuvre.

Ces buts sont atteints avec un dispositif de production d'une boisson à base de lait comportant un conduit d'entrée vapeur destiné à coopérer avec un embout de buse de sortie vapeur d'une machine à café et un conduit de distribution de la boisson à base de lait destiné à déverser la boisson dans un récipient, le conduit de distribution comportant une extrémité libre munie de moyens de maintien et de positionnement de ladite extrémité destinés à coopérer avec des moyens de maintien et de positionnement agencés sur une buse de sortie café de la machine à café, lesdits moyens de maintien et de positionnement permettant d'assembler ou de séparer l'extrémité du conduit de distribution de la buse de sortie café sans faire appel à un outil, caractérisé en ce que les moyens de maintien de l'extrémité du conduit de distribution comportent une partie magnétique ou un aimant. Ainsi, l'extrémité du conduit de distribution et la buse de sortie café sont agencées au plus près pour permettre d'utiliser un récipient adapté au volume de la boisson.

De plus, une machine à café coopérant avec un tel dispositif comporte généralement une buse de sortie café mobile notamment en translation verticale pour s'adapter à une hauteur d'un récipient agencé sur un repose-tasse de la machine à café. Ainsi, l'utilisateur qui prépare deux boissons successives dans des récipients de tailles différentes repositionne en même temps la buse de sortie café et l'extrémité libre du conduit de distribution au-dessus de l'ouverture de chaque récipient.

Cette disposition permet d'assembler ou de séparer l'extrémité du conduit de distribution de la buse de sortie café très facilement.

Avantageusement, les moyens de positionnement de l'extrémité du conduit de distribution comportent un logement de réception destiné à coopérer avec les moyens de positionnement agencés sur la buse de sortie café.

De tels moyens de positionnement, notamment lorsqu'ils sont couplés aux moyens de maintien magnétiques permettent un auto alignement des moyens de positionnement de l'extrémité et des moyens de positionnement agencés sur la buse de sortie café. Ainsi, cette disposition permet d'obtenir une mise en place facile de l'extrémité du conduit de distribution sur la buse de sortie café, même lorsque la zone d'assemblage n'est pas très visible.

De préférence, le conduit de distribution est réalisé, au moins partiellement, en un matériau souple.

Cette disposition permet d'obtenir une extrémité libre du conduit de distribution mobile dans toutes les directions. Ainsi, si le dispositif coopère avec une buse de sortie café mobile, l'extrémité libre peut suivre tous les déplacements de la buse de sortie café.
Avantageusement, le matériau souple est du silicone.

Cette disposition permet de réaliser de manière très économique une partie souple du conduit de distribution.

De préférence, l'extrémité du conduit de distribution comporte une zone de préhension.

Avantageusement, la zone de préhension forme une poignée.

Ainsi, l'utilisateur peut facilement prendre et positionner l'extrémité du conduit de distribution sur la buse de sortie café.

De préférence, le conduit de distribution de la boisson à base de lait est amovible du dispositif pour permettre d'assembler ou de séparer la conduite de distribution du dispositif sans faire appel à un outil.

Cette disposition permet de faciliter le nettoyage du conduit de distribution et permet également de faciliter le rangement du dispositif.

L'invention concerne également une machine à café comportant un dispositif de production d'une boisson à base de lait tel que précédemment décrit, ladite machine à café comportant la buse de sortie café munie des moyens de maintien et de positionnement coopérant avec les moyens de maintien et de positionnement de l'extrémité libre du conduit de distribution.

Avantageusement, les moyens de maintien agencés sur la buse comportent une partie magnétique ou un aimant.

Dans le cas où les moyens de maintien agencés sur la buse comportent une partie magnétique, les moyens de maintien agencés sur l'extrémité du conduit de distribution comportent un aimant. Et réciproquement, si les moyens de maintien agencés sur la buse comportent un aimant, les moyens de maintien agencés sur l'extrémité du conduit de distribution comportent une partie magnétique.

De préférence, la buse de sortie café et les moyens de maintien et de positionnement sont mobiles, notamment en translation verticale pour s'adapter à une hauteur d'un récipient agencé sur un repose-tasse de la machine à café.

Ainsi, en un seul mouvement, l'utilisateur ajuste simultanément la position de la buse de sortie café et de l'extrémité du conduit de distribution au-dessus d'un récipient dans le cas de la préparation d'une boisson à base de café et de lait.

Avantageusement, les moyens de positionnement agencés sur la buse de sortie café comportent une protubérance.

La coopération du logement de réception de l'extrémité du conduit de distribution avec une protubérance agencée sur la buse de sortie café permet de réaliser des moyens de positionnement simples et efficaces. Le logement de réception et la protubérance peuvent comporter des chanfreins ou des parois inclinées pour favoriser l'assemblage.

L'invention sera mieux comprise à l'étude des modes de réalisation pris à titre nullement limitatif et illustrés dans les figures annexées dans lesquelles :
- La figure 1 illustre une vue en perspective d'un dispositif de production d'une boisson à base de lait coopérant avec un embout de buse de sortie vapeur d'une machine à café selon un mode particulier de réalisation de l'invention.
- La figure 2 illustre une vue en perspective du dispositif de production d'une boisson à base de lait coopérant avec l'embout de buse de sortie vapeur dans une position accouplée, illustré sur la figure 1.
- La figure 3 illustre une vue en perspective du dispositif de production d'une boisson à base de lait illustré sur la figure 1, le dispositif et l'embout de buse de sortie vapeur étant dans une position désaccouplée.
- La figure 4 illustre une vue éclatée en perspective du dispositif de production d'une boisson à base de lait et de l'embout de buse de sortie vapeur illustré sur la figure 1.
- La figure 5 illustre une vue suivant le plan de coupe V du système de moussage du dispositif de production d'une boisson à base de lait illustré sur la figure 4.
- La figure 6 illustre une vue suivant le plan de coupe VI du dispositif de production d'une boisson à base de lait et de l'embout de buse de sortie vapeur illustré sur la figure 2.
- La figure 7 illustre une vue suivant le plan de coupe VII du dispositif de production d'une boisson à base de lait illustré sur la figure 3.
- La figure 8 illustre une vue en perspective du dispositif de manoeuvre du mors mobile du dispositif de production d'une boisson à base de lait et de l'embout de buse de sortie vapeur illustré sur la figure 1.
- La figure 9 illustre une vue de détail en éclaté de la buse de sortie café et l'extrémité du conduit de distribution du dispositif de production d'une boisson à base de lait et de la machine à café illustré à la figure 1.
- La figure 10 illustre une vue de face du dispositif de production d'une boisson à base de lait coopérant avec la machine à café illustré à la figure 1, la buse de sortie café ainsi que l'extrémité du conduit de distribution étant en position relevée.
- La figure 11 illustre une vue de face du dispositif de production d'une boisson à base de lait coopérant avec la machine à café illustré à la figure 1, la buse de sortie café ainsi que l'extrémité du conduit de distribution étant en position abaissée.
- La figure 12 illustre une vue en perspective écorchée du dispositif de production d'une boisson à base de lait illustré à la figure 1, le système de moussage étant en position assemblée et le système d'accouplement en position accouplée.
- La figure 13 illustre une vue en perspective écorchée du dispositif de production d'une boisson à base de lait illustré à la figure 1, le système de moussage étant en position extraite et le système d'accouplement en position désaccouplée.

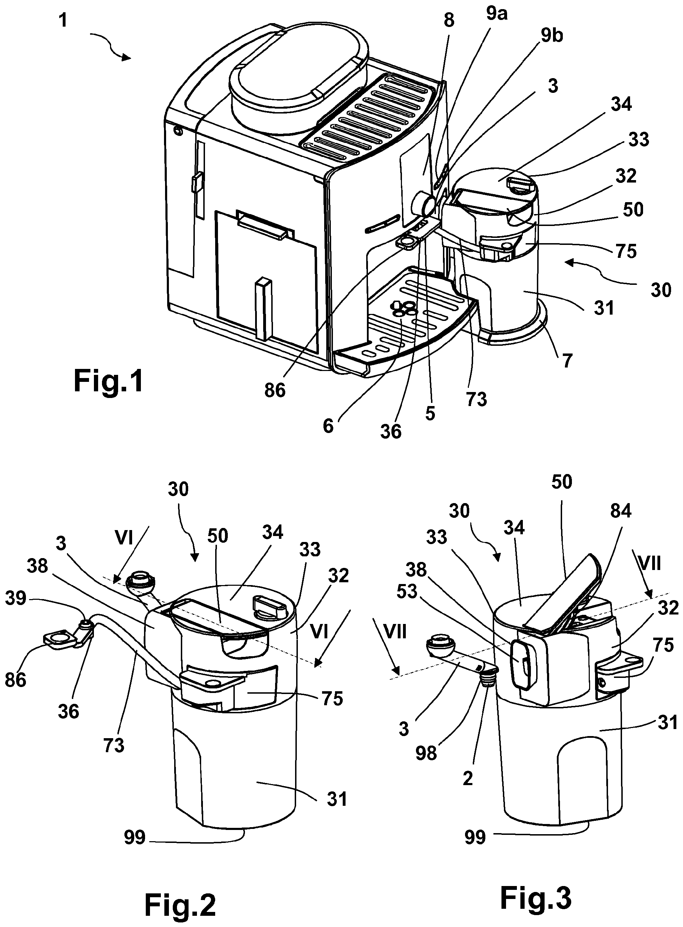

Dans l'exemple de réalisation représenté à la figure 1, un dispositif 30 de production d'une boisson à partir de lait est accouplée à un embout de buse de sortie vapeur 2 d'une machine à café 1. La machine à café 1 comporte une chaudière (non illustrée sur les figures) permettant de produire de l'eau chaude et/ou de la vapeur pour alimenter l'embout de buse de sortie vapeur 2. La machine à café 1 comporte un conduit vapeur 3 articulé (Fig.3), qui s'étend vers l'extérieur de la machine à café 1 et se termine par l'embout de buse de sortie vapeur 2. L'embout de buse de sortie vapeur 2 est agencé verticalement pour que le jet de vapeur soit dirigé vers le bas. La machine à café 1 comporte une chambre d'infusion (non illustrée sur les figures) alimentée en eau chaude pour préparer un café qui est distribué par une buse de sortie café 5 agencée au-dessus d'un repose-tasse 6 recevant un récipient (non illustré sur les figures).

La machine à café 1 peut être à la base une machine à café comportant une buse de moussage et de réchauffage de lait amovible telle que décrite dans la demande de brevet EP2606783. La buse de moussage et de réchauffage est détachée de l'embout de buse de sortie vapeur 2 et le dispositif 30 de production d'une boisson à partir de lait, notamment de lait chauffé et moussé, est accouplé en lieu et place à l'embout de buse de sortie vapeur 2. Le dispositif 30 comporte un conduit de distribution 73 du lait chauffé et moussé comprenant une extrémité 36 libre. L'extrémité 36 par laquelle s'écoule le lait chauffé et moussé est agencée au voisinage de la buse de sortie café 5 de manière détachable et permet de réaliser notamment un cappuccino. La machine à café 1 peut comporter une base de réception 7 du dispositif 30 agencé à coté du repose-tasse 6. La machine à café 1 comporte un tableau de commande 8 comportant notamment un bouton de commande 9a d'un cycle de production de vapeur. Le tableau de commande 8 peut comporter un bouton de commande 9b de distribution d'un cappuccino, soit l'enchainement d'un cycle de distribution de lait chaud moussé et d'un cycle de distribution d'un café.

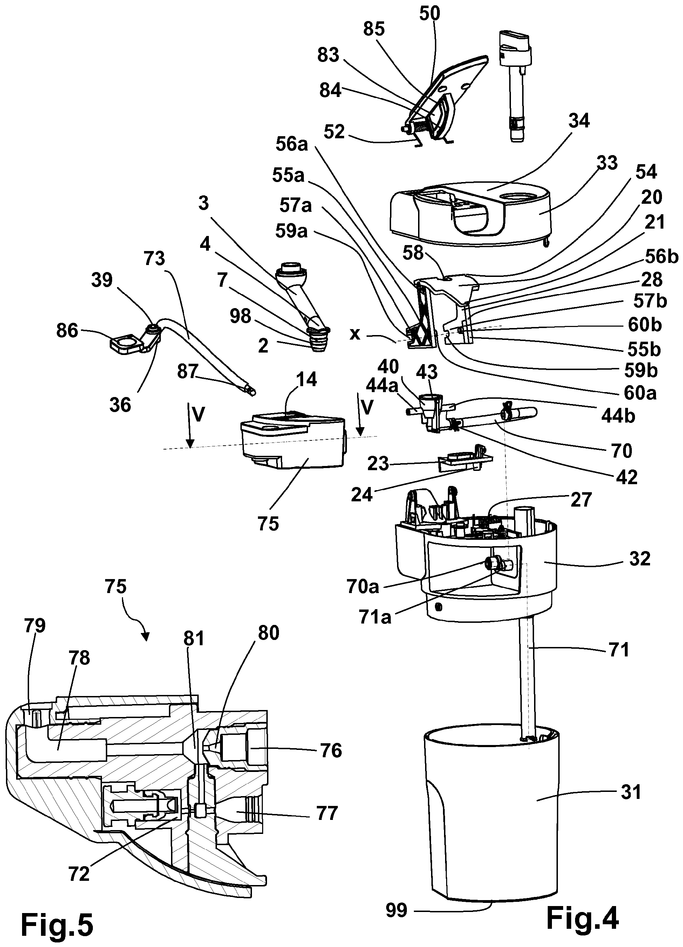

Conformément aux figures 4 et 5, le dispositif 30 comporte un réservoir 31 permettant de recevoir du lait et un système de moussage 75. Le système de moussage 75 se présente sous la forme d'une cassette amovible du dispositif 30 pour faciliter son nettoyage. Le dispositif 30 comporte un couvercle 32 disposé sur le réservoir 31. Le système de moussage 75 est agencé de manière amovible dans le couvercle 32. Le dispositif 30 comporte un conduit d'entrée vapeur 70, un conduit lait 71, un conduit air 72 et le conduit de distribution 73 du lait chauffé et moussé. Le conduit d'entrée vapeur 70 comporte une extrémité 70a qui est raccordée au système de moussage 75 par une chambre d'entrée 76. La chambre d'entrée 76 comprend une portion convergente 80 apte à créer un effet venturi lors de l'injection de la vapeur, c'est-à-dire apte à créer une dépression dans une cavité 81 agencée en aval de la portion convergente 80. Le conduit lait 71 comporte une extrémité 71a qui est raccordée au système de moussage 75 par une chambre d'entrée 77 reliée à la cavité 81. Le système de moussage 75 comporte le conduit air 72 qui relie l'air extérieur à la cavité 81. La dépression créée dans la cavité 81 permet d'aspirer dans cette cavité 81 du lait et de l'air qui vont se mélanger à la vapeur pour former le lait moussé. Le conduit de distribution 73 du lait moussé est raccordé au système de moussage 75 par une chambre de sortie 78 reliée à la cavité 81.

Tel que visible aux figures 4 à 8, le dispositif 30 de production d'une boisson à partir de lait comporte un système d'accouplement à l'embout de buse de sortie vapeur 2 comportant un mors fixe 46 et un mors 40 mobile. Le mors 40 est mobile entre une position accouplée dans laquelle une liaison étanche est établie entre l'embout de buse de sortie vapeur 2 et le conduit d'entrée vapeur 70 et dans laquelle le dispositif 30 ne peut pas être séparé de l'embout de buse de sortie vapeur 2, et une position désaccouplée dans laquelle le dispositif 30 peut être séparé de l'embout de buse de sortie vapeur 2. Le mors 40 mobile est formé par un réceptacle 41 comprenant un conduit latéral 42 au conduit d'entrée vapeur 70. Ainsi, le mors 40 mobile forme une extrémité du conduit d'entrée vapeur 70. Pour permettre la mobilité du mors 40, le conduit d'entrée vapeur 70 est réalisé au moins partiellement en un matériau souple. Le réceptacle 41 a une forme générale conique qui reprend la forme extérieure de l'embout de buse de sortie vapeur 2. Le réceptacle 41 comporte une ouverture supérieure 43 dans laquelle l'embout de buse de sortie vapeur 2 est inséré lors de l'accouplement.

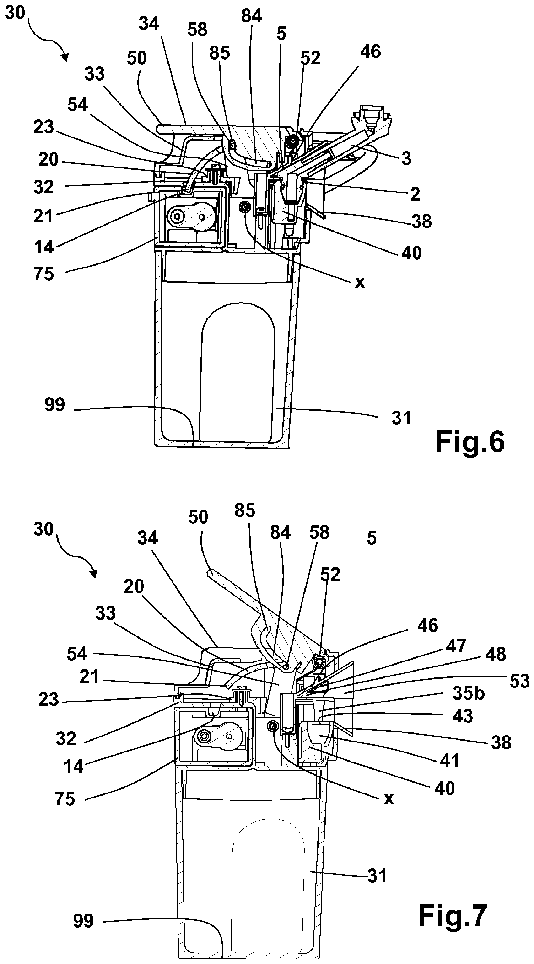

Le mors 40 mobile est agencé dans le couvercle 32 et il est mobile suivant une direction verticale à l'encontre du mors fixe 46 lors de l'accouplement. Le mors 40 mobile comporte deux tourillons 44a, 44b latéraux coopérant avec deux fentes 35a (non représenté sur les figures), 35b ménagées dans le couvercle 32. Le mors fixe 46 est agencé dans le couvercle 32, au-dessus du mors 40 mobile et comprend une paroi 47 définissant un logement de réception 48 d'une face supérieure 4 de l'embout de buse de sortie vapeur 2 (Fig.7).

Le couvercle 32 comporte une paroi 38 de forme tronconique s'étendant radialement vers l'extérieur et formant un logement 53 de réception destiné à guider l'embout de buse de sortie vapeur 2 au-dessus du mors 40 mobile, lors de l'accouplement.

Le système d'accouplement comporte un levier 50 de manoeuvre du mors 40 mobile. Le couvercle 32 comporte un capot supérieur 33 définissant une face supérieure 34 du couvercle 32 sur laquelle le levier 50 est agencé. Le levier 50 est mobile en rotation entre une position déployée au-dessus de la face supérieure 34 dans laquelle le mors 40 mobile est en position désaccouplée (Fig. 3 et 7) et une position rabattue sur la face supérieure 34 dans laquelle le mors 40 mobile est en position accouplée (Fig.2 et 6). Le levier 50 comporte une nervure inférieure 83 comprenant un chemin de came 84.

Le système d'accouplement comporte une pièce de transmission 54 du mouvement du levier 50 au mors 40 mobile. La pièce de transmission 54 comporte deux parois latérales 55a, 55b parallèles, en forme de L. Chaque paroi latérale 55a, 55b comporte donc une grande branche 56a, 56b et une petite branche 57a, 57b liées entre elles à la base du L. La pièce de transmission 54 comporte à la base du L deux tourillons 60a, 60b. Ainsi la pièce de transmission est montée mobile en rotation dans le couvercle 32 autour d'un axe x passant par les tourillons 60a, 60b. Les grandes branches 56a, 56b sont reliées entre elles à partir de leurs extrémités par une tige 58. Les petites branches 57a, 57b comportent à leurs extrémités des logements 59a, 59b de forme allongée, sensiblement oblongue. La tige 58 coopère avec le chemin de came 84 du levier 50 et les logements 59a, 59b coopèrent avec les tourillons 44a, 44b du mors 40 mobile. Le chemin de came 84 comporte une portion d'extrémité 85 sensiblement verticale lorsque le levier 50 est en position rabattue et qui forme une inflexion dans le profil du chemin de came 84. Le levier 50 est maintenu en position déployée sous l'action d'un ressort de rappel 52.

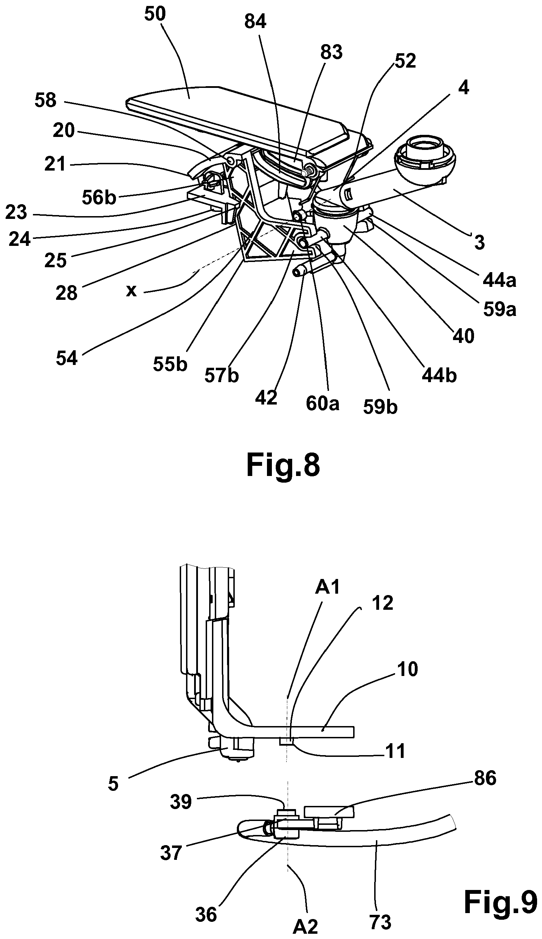

Conformément à la figure 9, la buse de sortie café 5 comporte une patte de préhension 10 s'étendant horizontalement vers l'extérieur de la machine à café. La patte de préhension 10 comprend une protubérance 11, sensiblement cylindrique d'axe A1, qui s'étend vers le bas. La protubérance 11 comprend une partie magnétique 12, réalisée notamment en un acier ferromagnétique.

L'extrémité 36 du conduit de distribution 73 comporte un aimant 37 agencé sous un logement de réception 39. Le logement de réception 39 présente une forme cylindrique d'axe A2, complémentaire de la forme de la protubérance 11 avec laquelle il est destiné à coopérer pour assembler l'extrémité 36 sur la buse de sortie café 5. L'extrémité 36 du conduit de distribution 73 comporte une poignée 86 de préhension, s'étendant perpendiculairement à l'axe A2 du logement de réception 39.

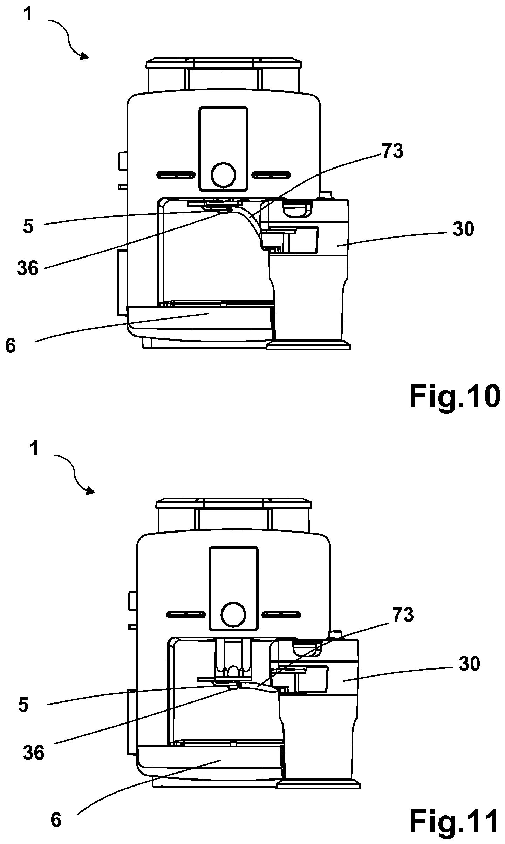

Tel que visible aux figures 10 et 11, l'extrémité 36 du conduit de distribution 73 est agencée sur la buse de sortie café 5. La buse de sortie café 5 est mobile entre une position relevée (Fig. 10) dans laquelle un récipient de grande taille peut être placé sur le repose-tasse 6 et une position abaissée (Fig.11) dans laquelle un récipient de petite taille peut être placé sur le repose-tasse 6. Le conduit de distribution 73 est formé dans une partie centrale par un tube souple en silicone.

Conformément aux figures 4 et 5, le conduit de distribution 73 comporte un embout 87 présentant une forme cylindrique. L'embout 87 est destiné à coopérer avec une extrémité 79 (Fig. 5) de la chambre de sortie 78 du système de moussage 75. L'extrémité 79 comporte une forme complémentaire de la forme cylindrique de l'embout 87 et un revêtement souple pour permettre d'assembler de manière étanche ou de séparer la conduite de distribution 73 du système de moussage 75.

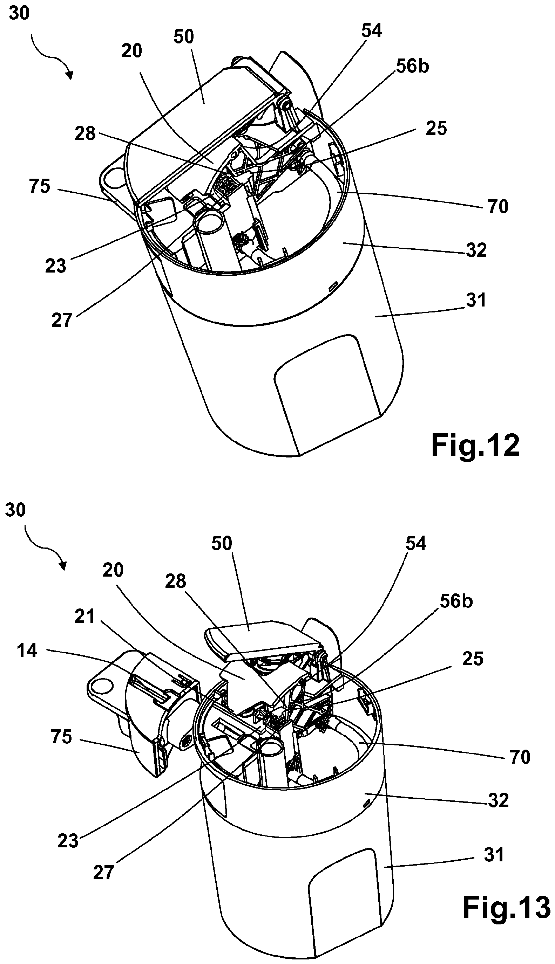

Tel que visible aux figures 4 à 7, 12 et 13, la pièce de transmission 54 du système d'accouplement comporte une paroi 20 présentant une forme en arc de cercle. La paroi 20 comporte une extrémité de forme trapézoïdale formant un verrou 21. Le verrou 21 est mobile entre une position de maintien (Fig.6 et 12) du système de moussage 75 lorsque le système d'accouplement est en position accouplée et une position de libération (Fig.7 et 13) du système de moussage lorsque le système d'accouplement est en position désaccouplée.

Le système de moussage 75 est amovible du couvercle 32 entre une position assemblée (Fig.12) et une position extraite (Fig.13). Le passage de la position extraite à la position assemblée se fait par une translation horizontale. Le système de moussage comporte une cavité 14. Le verrou 21 en position de maintien est agencé dans la cavité 14 pour empêcher l'extraction du système de moussage 75. Le verrou 21 en position de libération est en dehors de la cavité 14 pour permettre l'extraction du système de moussage 75.

Conformément aux figures 4 à 8, 12 et 13, le dispositif 30 comporte une butée 23 agencée dans le couvercle 32 de manière coulissante en translation entre une position bloquée et une position désengagée. La butée 23 comporte une excroissance 24 (Fig.4) coopérant avec le système de moussage 75 pour faire passer la butée 23 de la position bloquée à la position désengagée lorsque le système de moussage 75 passe de la position extraite à la position assemblée. La butée 23 est soumise à l'effort de rappel d'un ressort 27 pour faire passer la butée 23 de la position désengagée à la position bloquée.

La butée 23 comporte un bossage 25 qui s'étend vers la pièce de transmission 54, plus particulièrement vers une face 28 de la grande branche 57b. Lorsque le système d'accouplement est en position désaccouplée et que le système de moussage 75 est en position extraite, la butée 23 est en position bloquée dans laquelle le bossage 25 est agencé en vis-à-vis de la face 28 (Fig.13). Ainsi, la pièce de transmission 54 ne peut pivoter et le système d'accouplement est immobilisé. Si le système de moussage 75 est introduit en position assemblée, le système de moussage 75 coopère avec l'excroissance 24 pour faire passer la butée 23 en position désengagée dans laquelle le bossage 25 est décalé de la face 28 (Fig.8 et 12). Ainsi, la pièce de transmission 54 peut pivoter et le système d'accouplement est libéré.

En fonctionnement, l'utilisateur verse du lait dans le réservoir 31 et repositionne le couvercle 32 sur le réservoir 31. Il relève le levier 50 dont le chemin de came 84 agit sur la tige 58 de la pièce de transmission 54 pour la faire pivoter. Le pivotement de la pièce de transmission 54 induit le pivotement des logements 59a, 59b qui entrainent les tourillons 44a, 44b et le mors 40 mobile vers le bas en l'écartant du mors fixe 46 pour créer un espace de réception de l'embout de buse de sortie vapeur 2 (Fig. 7).

L'utilisateur positionne, dans un mouvement d'approche horizontal du dispositif 30 vers la machine à café 1, le mors fixe 46 sur la face supérieure 4 de l'embout de buse de sortie vapeur 2 et le mors 40 mobile sous l'embout de buse de sortie vapeur 2 et pose le dispositif 30 sur la base de réception 7 de la machine à café 1. Ensuite, il bascule le levier 50 dans la position rabattue sur la face supérieure 34 du couvercle 32, ce qui a pour effet de faire translater le mors 40 mobile vers le mors fixe 46 pour immobiliser l'embout de buse de sortie vapeur 2 et établir une liaison étanche entre l'embout de buse de sortie vapeur 2 et le conduit d'entrée vapeur 70.

L'utilisateur saisit la poignée 86 de préhension de l'extrémité 36 du conduit de distribution 73 et assemble le logement de réception 39 sur la protubérance 11 de la buse de sortie café 5. L'aimant 37 et la partie magnétique 12 maintiennent cet assemblage. L'utilisateur peut alors poser un récipient sur le repose-tasse 6 et ajuster la position de la buse de sortie café 5 et de l'extrémité 36.

L'utilisateur appuie ensuite sur le bouton de commande 9b de distribution d'un cappuccino, soit l'enchainement d'un cycle de distribution de lait chaud moussé et d'un cycle de distribution d'un café. La chaudière de la machine à café 1 est tout d'abord activée pour générer un flux de vapeur qui circule par l'embout de buse de sortie vapeur 2 et par le conduit d'entrée vapeur 70 pour passer dans le système de moussage 75. Le mélange de l'air, du lait avec la vapeur forme du lait chauffé et moussé qui est distribué par l'extrémité 36 dans le récipient. Lorsque la quantité programmé de lait moussé est atteinte, la machine à café réalise un cycle de distribution d'un café qui s'écoule dans le récipient par la buse sortie café 5. Une boisson du type cappuccino peut donc être réalisée automatiquement après un appui sur le bouton de commande 9b, sans intervention de l'utilisateur.

L'utilisateur peut ensuite séparer l'extrémité 36 de la buse de sortie café 5 et relever le levier 50 en position déployée pour désaccoupler le dispositif 30 de la machine à café 1.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

Dans une variante de réalisation non représentée sur les figures, les moyens de maintien de l'extrémité du conduit de distribution sont des moyens mécaniques formés par exemple par une pince du type « pince à linge » comprenant deux mors mobiles entre une position ouverte et une position fermée. La pince comporte un ressort de rappel des mors en position fermée. La pince est destinée à coopérer avec la patte de préhension de la buse de sortie café.

## Revendications

1. Dispositif (30) de production d'une boisson à base de lait comportant un conduit d'entrée vapeur (70) destiné à coopérer avec un embout de buse de sortie vapeur (2) d'une machine à café (1) et un conduit de distribution (73) de la boisson à base de lait destiné à déverser la boisson dans un récipient, le conduit de distribution (73) comportant une extrémité (36) libre munie de moyens de maintien (37) et de positionnement (39) de ladite extrémité (36) destinés à coopérer avec des moyens de maintien (12) et de positionnement (11) agencés sur une buse de sortie café (5) de la machine à café (1), lesdits moyens de maintien (12, 37) et de positionnement (11, 39) permettant d'assembler ou de séparer l'extrémité (36) du conduit de distribution (73) de la buse de sortie café (5) sans faire appel à un outil, **caractérisé en ce que** les moyens de maintien de l'extrémité (36) du conduit de distribution (73) comportant une partie magnétique ou un aimant (37).

2. Dispositif (30) de production d'une boisson à base de lait selon la revendication 1, **caractérisé en ce que** les moyens de positionnement de l'extrémité (36) du conduit de distribution (73) comportent un logement de réception (39) destiné à coopérer avec les moyens de positionnement (11) agencés sur la buse de sortie café (5).

3. Dispositif (30) de production d'une boisson à base de lait selon l'une quelconque des revendications précédentes, **caractérisé en ce que** le conduit de distribution (73) est réalisé, au moins partiellement, en un matériau souple.

4. Dispositif (30) de production d'une boisson à base de lait selon la revendication 3, **caractérisé en ce que** le matériau souple est du silicone.

5. Dispositif (30) de production d'une boisson à base de lait selon l'une quelconque des revendications précédentes, **caractérisé en ce que** l'extrémité (36) du conduit de distribution (73) comporte une zone de préhension (86).

6. Dispositif (30) de production d'une boisson à base de lait selon la revendication 5, **caractérisé en ce que** la zone de préhension forme une poignée (86).

7. Dispositif (30) de production d'une boisson à base de lait selon l'une quelconque des revendications précédentes, **caractérisé en ce que** le conduit de distribution (73) de la boisson à base de lait est amovible du dispositif (30) pour permettre d'assembler ou de séparer la conduite de distribution (73) du dispositif sans faire appel à un outil.

8. Machine à café (1) comportant un dispositif (30) de production d'une boisson à base de lait conforme à l'une des revendications 1 à 7, ladite machine à café (1) comportant la buse de sortie café (5) munie des moyens de maintien (12) et de positionnement (11) coopérant avec les moyens de maintien (37) et de positionnement (39) de l'extrémité (36) libre du conduit de distribution (73).

9. Machine à café (1) selon la revendication 8, **caractérisée en ce que** les moyens de maintien agencés sur la buse comportent une partie magnétique (12) ou un aimant.

10. Machine à café (1) selon l'une quelconque des revendications 8 à 9, **caractérisée en ce que** la buse de sortie café (5) et les moyens de maintien (12) et de positionnement (11) sont mobiles, notamment en translation verticale pour s'adapter à une hauteur d'un récipient agencé sur un repose-tasse (6) de la machine à café (1).

11. Machine à café (1) selon l'une quelconque des revendications 8 à 10, **caractérisée en ce que** les moyens de positionnement agencés sur la buse comportent une protubérance (11).

## Patentansprüche

1. Vorrichtung (30) zur Herstellung eines Getränks auf Milchbasis, aufweisend eine Leitung zum Einlass von Dampf (70), die dazu bestimmt ist, mit einer Dampfauslassdüse (2) einer Kaffeemaschine (1) zusammenzuwirken, und eine Leitung zur Ausgabe (73) des Getränks auf Milchbasis, die dazu bestimmt ist, das Getränk in einen Behälter einzufüllen, wobei die Leitung zur Ausgabe (73) ein freies Ende (36) aufweist, das mit Mitteln zur Halterung (37) und zur Positionierung (39) des Endes (36) versehen ist, die dazu bestimmt sind, mit Mitteln zur Halterung (12) und zur Positionierung (11) zusammenzuwirken, die an einer Kaffeeauslassdüse (5) der Kaffeemaschine (1) angeordnet sind, wobei die Mittel zur Halterung (12, 37) und zur Positionierung (11, 39) es ermöglichen, das Ende (36) der Leitung zur Ausgabe (73) von der Kaffeeauslassdüse (5) ohne Verwendung eines Werkzeugs zusammenzufügen oder zu trennen, **dadurch gekennzeichnet, dass** die Mittel zur Halterung des Endes (36) der Leitung zur Ausgabe (73) einen magnetischen Teil oder einem Magneten (37) aufweisen.

2. Vorrichtung (30) zur Herstellung eines Getränks auf Milchbasis nach Anspruch 1, **dadurch gekennzeichnet, dass** die Mittel zur Positionierung des Endes (36) der Leitung zur Ausgabe (73) ein Aufnahmegehäuse (39) aufweisen, das dazu bestimmt ist mit den an der Kaffeeauslassdüse (5) angeordneten Positionierungsmitteln (11) zusammenzuwirken.

3. Vorrichtung (30) zur Herstellung eines Getränks auf Milchbasis nach einem der vorhergehenden Ansprüche, **dadurch gekennzeichnet, dass** die Leitung zur Ausgabe (73) zumindest teilweise aus einem flexiblen Material hergestellt ist.

4. Vorrichtung (30) zur Herstellung eines Getränks auf Milchbasis nach Anspruch 3, **dadurch gekennzeichnet, dass** das flexible Material Silikon ist.

5. Vorrichtung (30) zur Herstellung eines Getränks auf Milchbasis nach einem der vorhergehenden Ansprüche, **dadurch gekennzeichnet, dass** das Ende (36) der Leitung zur Ausgabe (73) einen Griffbereich (86) aufweist.

6. Vorrichtung (30) zur Herstellung eines Getränks auf Milchbasis nach Anspruch 5, **dadurch gekennzeichnet, dass** der Griffbereich einen Griff (86) bildet.

7. Vorrichtung (30) zur Herstellung eines Getränks auf Milchbasis nach einem der vorhergehenden Ansprüche, **dadurch gekennzeichnet, dass** die Leitung zur Ausgabe (73) des Getränks auf Milchbasis aus der Vorrichtung (30) entnehmbar ist, um es zu ermöglichen, die Leitung zur Ausgabe (73) von der Vorrichtung ohne Verwendung eines Werkzeugs zusammenzufügen oder zu trennen.

8. Kaffeemaschine (1), aufweisend eine Vorrichtung (30) zur Herstellung eines Getränks auf Milchbasis nach einem der Ansprüche 1 bis 7, wobei die Kaffeemaschine (1) die Kaffeeauslassdüse (5) aufweist, die mit Mitteln zur Halterung (12) und zur Positionierung (11) versehen ist, die mit den Mitteln zur Halterung (37) und zur Positionierung (39) des freien Endes (36) der Leitung zur Ausgabe (73) zusammenwirken.

9. Kaffeemaschine (1) nach Anspruch 8, **dadurch gekennzeichnet, dass** die an der Düse angeordneten Mittel zur Halterung einen magnetischen Teil (12) oder einen Magneten aufweisen.

10. Kaffeemaschine (1) nach einem der Ansprüche 8 bis 9, **dadurch gekennzeichnet, dass** die Kaffeeauslassdüse (5) und die Mittel zur Halterung (12) und Positionierung (11) insbesondere in vertikaler Verschiebung bewegbar sind, um sich an eine Höhe eines Behälters anzupassen, der auf einer Tassenablage (6) der Kaffeemaschine (1) angeordnet ist.

11. Kaffeemaschine (1) nach einem der Ansprüche 8 bis 10, **dadurch gekennzeichnet, dass** die an der Düse angeordneten Positionierungsmittel einen Vorsprung (11) aufweisen.

## Claims

1. Device (30) for the production of a drink with a milk base comprising a steam inlet duct (70) intended to engage with a tip of a steam outlet nozzle (2) of a coffee machine (1) and a distribution duct (73) of the drink with a milk base intended to pour the drink into a recipient, the distribution duct (73) comprising a free end (36) provided with means for maintaining (37) and for positioning (39) said end (36) intended to engage with means for maintaining (12) and for positioning (11) arranged on a coffee outlet nozzle (5) of the coffee machine (1), said means for maintaining (12, 37) and for positioning (11, 39) making it possible to assemble or to separate the end (36) of the distribution duct (73) from the coffee outlet nozzle (5) without requiring the use of a tool, **characterised in that** the means for maintaining the end (36) of the distribution duct (73) comprising a magnetic portion or a magnet (37).

2. Device (30) for the production of a drink with a milk base according to claim 1, **characterised in that** the means for positioning the end (36) of the distribution duct (73) comprise a receiving housing (39) intended to engage with the means for positioning (11) arranged on the coffee outlet nozzle (5).

3. Device (30) for the production of a drink with a milk base according to any preceding claim, **characterised in that** the distribution duct (73) is made, at least partially, from a flexible material.

4. Device (30) for the production of a drink with a milk base according to claim 3, **characterised in that** the flexible material is silicone.

5. Device (30) for the production of a drink with a milk base according to any preceding claim, **characterised in that** the end (36) of the distribution duct (73) comprises a gripping zone (86).

6. Device (30) for the production of a drink with a milk base according to claim 5, **characterised in that** the gripping zone forms a handle (86).

7. Device (30) for the production of a drink with a milk base according to any preceding claim, **characterised in that** the distribution duct (73) of the drink with a milk base can be removed from the device (30) in order to make it possible to assemble or separate the distribution duct (73) of the device without requiring the use of a tool.

8. Coffee machine (1) comprising a device (30) for the production of a drink with a milk base in accordance with one of claims 1 to 7, said coffee machine (1) comprising the coffee outlet nozzle (5) provided with means for maintaining (12) and for positioning (11) engaging with the means for maintaining (37) and for positioning (39) the free end (36) of the distribution duct (73).

9. Coffee machine (1) according to claim 8, **characterised in that** the means for maintaining arranged on the nozzle comprise a magnetic portion (12) or a magnet.

10. Coffee machine (1) according to any of claims 8 to 9, **characterised in that** the coffee outlet nozzle (5) and the means for maintaining (12) and for positioning (11) are mobile, in particular in vertical translation in order to adapt to a height of a recipient arranged on a cup holder (6) of the coffee machine (1).

11. Coffee machine (1) according to any of claims 8 to 10, **characterised in that** the means for positioning arranged on the nozzle comprise a protuberance (11).
